# EUROPEAN PATENT APPLICATION

(11) **EP 4 203 588 A1**
(43) Date of publication of application: **28.06.2023**
(21) Application number: 21869802.5
(22) Date of filing: 17.09.2021
(51) Int. Cl.: H04W 72/12, H04W 72/04, H04L 5/00, H04W 88/08, H04W 92/24

(54) **DEVICE AND METHOD FOR FRONTHAUL TRANSMISSION IN WIRELESS COMMUNICATION SYSTEM**

(30) Priority: 17.09.2020 KR 20200120105
(71) Applicant: Samsung Electronics Co., Ltd., Suwon-si, Gyeonggi-do 16677 (KR)
(72) Inventor: LIM, Hyoungjin, Suwon-si, Gyeonggi-do 16677 (KR); KIM, Daehoon, Suwon-si, Gyeonggi-do 16677 (KR); KIM, Bongjin, Suwon-si, Gyeonggi-do 16677 (KR); SONG, Moongun, Suwon-si, Gyeonggi-do 16677 (KR); OH, Jongho, Suwon-si, Gyeonggi-do 16677 (KR); HWANG, Wonjun, Suwon-si, Gyeonggi-do 16677 (KR)
(74) Representative: Gulde & Partner
(86) International application number: PCT/KR2021/012850
(87) International publication number: WO 2022/060180

(57) **Abstract**

The present disclosure relates to a 5^{th} generation (5G) or pre-5G communication system for supporting higher data transmission rates than 4^{th} generation (4G) systems, such as long-term evolution (LTE). According to one embodiment of the present disclosure, a digital unit (DU) device in a wireless communication system comprises a transceiver and at least one processor, wherein the at least one processor is configured to: set a section extension field including additional information; and transmit a first control message including the section extension field to a radio unit (RU) through a fronthaul interface, wherein the first control message can be used for scheduling a terminal on a control plane.

## Description

### [Technical Field]

The present disclosure generally relates to a wireless communication system, and more particularly, to a device and method for fronthaul multiple sub-carrier spacing signal transmission in a wireless communication system.

### [Background Art]

Efforts are being made to develop an improved 5^{th} generation (5G) communication system or a pre-5G communication system in order to meet the growing demand for wireless data traffic after the commercialization of a 4^{th} generation (4G) communication system. For this reason, the 5G communication system or pre-5G communication system is called a beyond 4G network communication system or a post LTE system.

In order to achieve a high data rate, the 5G communication system is being considered for implementation in a mmWave band (e.g., a 60 Giga Hertz (GHz) band). In order to mitigate a path loss of radio waves and increase a propagation distance of radio waves in an ultra-high frequency band, beamforming, massive multiple input multiple output (MIMO), full dimensional multiple input multiple output (FD-MIMO), array antenna, analog beamforming, and large scale antenna technologies are being discussed in the 5G communication system.

Also, to improve a system network, in the 5G communication system, an evolved small cell, an advanced small cell, a cloud radio access network (cloud RAN), an ultra-dense network, device to device communication (D2D), wireless backhaul, moving network, cooperative communication, coordinated multi-points (CoMP), and reception interference cancellation, etc. are being developed.

In addition, in the 5G system, advanced coding modulation (ACM) methods such as hybrid frequency shift keying and quadrature amplitude modulation (FQAM) and sliding window superposition coding (SWSC), and advanced access technologies such as filter bank multi carrier (FBMC), non-orthogonal multiple access (NOMA), and sparse code multiple access (SCMA), etc. are being developed.

As a transmission capacity increases in a wireless communication system, function split that functionally separates base stations is being applied. In accordance with the function split, the base station can be split into a digital unit (DU) and a radio unit (RU), and fronthaul for communication between the DU and the RU is defined, and transmission through the fronthaul is required.

### [Disclosure of Invention]

### [Technical Problem]

Based on the above discussion, the present disclosure presents a device and method for transmitting multiple subcarrier signals on a fronthaul interface.

Also, the present disclosure presents a device and method for a new form of section type and construction for presenting mixed-numerology related information.

Also, the present disclosure presents a device and method related to a frame format of a section extension for delivering mixed-numerology related information.

### [Solution to Problem]

According to an embodiment of the present disclosure, a method of operating a digital unit (DU) in a wireless communication system may include the processes of setting a section extension field including additional information, and transmitting a first control message including the section extension field to a radio unit (RU) through a fronthaul interface. The first control message may be used for scheduling a terminal on a control plane.

According to an embodiment of the present disclosure, a method of operating a radio unit (RU) in a wireless communication system may include the process of receiving a first control message including a section extension field from a digital unit (DU) through a fronthaul interface. The section extension field may include additional information, and the section extension field may be set by the DU, and the first control message may be used for scheduling a terminal on a control plane.

According to an embodiment of the present disclosure, a digital unit (DU) device in a wireless communication system may include a transceiver and at least one processor. The at least one processor may be configured to set a section extension field including additional information, and send a first control message including the section extension field to a radio unit (RU) through a fronthaul interface. The first control message may be used for scheduling a terminal on a control plane.

According to an embodiment of the present disclosure, a radio unit (RU) device in a wireless communication system may include a transceiver and at least one processor. The at least one processor may be configured to receive a first control message including a section extension field from a digital unit (DU) through a fronthaul interface. The section extension field may include additional information, and the section extension field may be set by the DU, and the first control message may be used for scheduling a terminal on a control plane.

### [Advantageous Effects of Invention]

According to a device and method of an embodiment of the present disclosure, an interface between a digital unit (DU) and a radio unit (RU) may be efficiently operated by presenting mixed-numerology related information through a new form of section type.

Effects obtainable in the present disclosure are not limited to the effects mentioned above, and other effects not mentioned above will be clearly understood by those having a general knowledge in the art to which the present disclosure belongs from the description below.

### [Brief Description of Drawings]

FIG. 1A illustrates a wireless communication system according to an embodiment of the present disclosure.
FIG. 1B illustrates an example of a fronthaul structure based on functional split of a base station according to an embodiment of the present disclosure.
FIG. 2 illustrates a construction of a digital unit (DU) according to an embodiment of the present disclosure.
FIG. 3 illustrates a construction of a radio unit (RU) according to an embodiment of the present disclosure.
FIG. 4 illustrates an example of function split according to an embodiment of the present disclosure.
FIG. 5 illustrates an example of a BWP construction according to an embodiment of the present disclosure.
FIG. 6A illustrates examples of various new forms of section types and constructions according to an embodiment of the present disclosure.
FIG. 6B illustrates other examples of various new forms of section types and constructions according to an embodiment of the present disclosure.
FIG. 6C illustrates further examples of various new forms of section types and constructions according to an embodiment of the present disclosure.
FIG. 6D illustrates further other examples of various new forms of section types and constructions according to an embodiment of the present disclosure.
FIG. 7 illustrates an example of connection between a DU and RUs according to an embodiment of the present disclosure.

### [BEST MODE FOR CARRYING OUT THE INVENTION]

Terms used in the present disclosure are only used to describe a specific embodiment, and may not be intended to limit the scope of other embodiments. Singular expressions may include plural expressions unless the context clearly dictates otherwise. Terms used herein, including technical or scientific terms, may have the same meaning as those commonly understood by a person having an ordinary skill in the art described in the present disclosure. Among the terms used in the present disclosure, terms defined in general dictionaries may be interpreted as having the same or similar meanings as those in the context of the related art, and unless explicitly defined in the present disclosure, are not be interpreted as ideal or excessively formal meanings. In some cases, even terms defined in the present disclosure may not be interpreted to exclude embodiments of the present disclosure.

In various embodiments of the present disclosure described below, a hardware access method is described as an example. However, since various embodiments of the present disclosure include a technology using both hardware and software, the various embodiments of the present disclosure do not exclude a software-based access method.

Terms referring to signals (e.g., message, information, preamble, signal, signaling, sequence, and stream) used in the following description, terms referring to resources (e.g., symbols, slot, subframe, radio frame, subcarrier, resource element (RE), resource block (RB), bandwidth part (BWP), and occasion), terms for operation state (e.g., step, operation, and procedure), terms referring to data (e.g., packet, user stream, information, bit, symbol, and codeword), terms referring to channel, terms referring to control information (e.g., downlink control information (DCI), medium access control control element (MAC CE), and radio resource control (RRC) signaling), terms referring to network entities, terms referring to components of a device, and the like are illustrated for convenience of description. Accordingly, the present disclosure is not limited to the terms described below, and other terms having equivalent technical meanings may be used.

Also, in the present disclosure, an expression of more than or less than may be used to determine whether a specific condition is satisfied or fulfilled, but this is only a description for expressing an example, and does not to exclude a description of equal to or more than, or equal to or less than. A condition described as `equal to or more than' may be replaced with `more than', and a condition described as `equal to or less than' may be replaced with `less than', and a condition described as `equal to or more than, and less than' may be replaced with `more than, and equal to or less than'.

Also, the present disclosure describes various embodiments by using terms used in some communication standards (e.g., 3rd generation partnership project (3GPP), extensible radio access network (xRAN), and open-radio access network (O-RAN)), but this is only an example for explanation. Various embodiments of the present disclosure may be easily modified and applied to other communication systems.

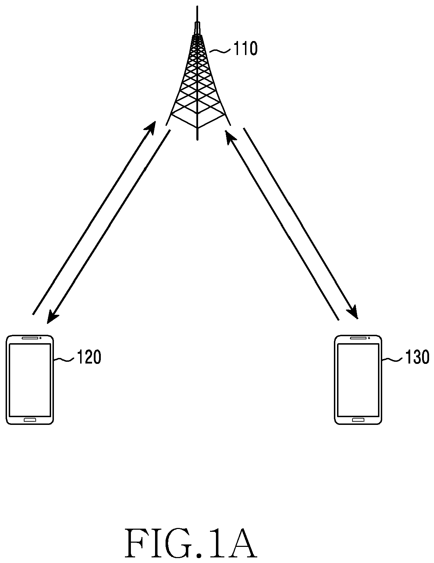

FIG. 1A illustrates a wireless communication system according to various embodiments of the present disclosure. FIG. 1A illustrates a base station 110, a terminal 120, and a terminal 130 as some of nodes using a wireless channel in the wireless communication system. Although FIG. 1A shows only one base station, other base stations identical or similar to the base station 110 may be further included.

The base station 110 is a network infrastructure that presents wireless access to the terminals 120 and 130. The base station 110 has coverage that is defined as a certain geographical area, based on a distance over which signals may be transmitted. The base station 110 may be referred to as, in addition to base station, `access point (AP)', `eNodeB (eNB)', `Sth generation node (5G node)', `next generation nodeB (gNB)', `wireless point', 'transmission/reception point (TRP)', or other terms having an equivalent technical meaning.

Each of the terminal 120 and the terminal 130 is a device used by a user and communicates with the base station 110 through a wireless channel. A link from the base station 110 to the terminal 120 or terminal 130 is referred to as downlink (DL), and a link from the terminal 120 or terminal 130 to the base station 110 is referred to as uplink (UL). Also, the terminal 120 and the terminal 130 may perform communication with each other through the wireless channel. In this case, a device-to-device link (D2D) between the terminal 120 and the terminal 130 is referred to as a sidelink, and the sidelink may be used interchangeably with a PC5 interface. In some cases, at least one of the terminal 120 and the terminal 130 may be operated without user's intervention. That is, at least one of the terminal 120 and the terminal 130 is a device that performs machine type communication (MTC), and may not be carried by the user. Each of the terminal 120 and the terminal 130 may be referred to as, in addition to terminal, `user equipment (UE)', `customer premises equipment (CPE)', `mobile station', `subscriber station', `remote terminal', `wireless terminal', `electronic device', or'user device' or other terms having an equivalent technical meaning.

The base station 110, the terminal 120, and the terminal 130 may perform beamforming. The base station and the terminal may transmit and receive radio signals in a relatively low frequency band (e.g., frequency range 1 (FR1) of NR). Also, the base station and the terminal may transmit and receive radio signals in a relatively high frequency band (e.g., FR2 of NR, and mmWave band (e.g., 28 GHz, 30 GHz, 38 GHz, and 60 GHz)). In some embodiments, the base station 110 may perform communication with the terminal 110 within a frequency range corresponding to FR1. In some embodiments, the base station may perform communication with the terminal 120 within a frequency range corresponding to FR2. At this time, in order to improve a channel gain, the base station 110, the terminal 120, and the terminal 130 may perform beamforming. Here, the beamforming may include transmit beamforming and receive beamforming. That is, the base station 110, the terminal 120, and the terminal 130 may give directivity to a transmitted signal or a received signal. To this end, the base station 110 and the terminals 120 and 130 may select serving beams through a beam search or beam management procedure. After the serving beams are selected, communication may be performed through a resource having a quasi-co-located (QCL) relationship with a resource having transmitted the serving beams.

When the large-scale characteristics of a channel carrying a symbol on a first antenna port may be inferred from a channel carrying a symbol on a second antenna port, the first antenna port and the second antenna port may be evaluated to be in a QCL relationship. For example, the large-scale characteristics may include at least one of delay spread, Doppler spread, Doppler shift, average gain, average delay, and spatial receiver parameter.

In FIG. 1A, it is shown that all of the base station and the terminals perform beamforming, but various embodiments of the present disclosure are not necessarily limited thereto. In some embodiments, the terminals may or may not perform the beamforming. Also, the base station may or may not perform the beamforming. That is, only one of the base station and the terminal may perform the beamforming, or all of the base station and the terminals may not perform the beamforming.

In the present disclosure, a beam refers to a spatial flow of a signal in a wireless channel, and is formed by one or more antennas (or antenna elements), and this forming process may be referred to as beamforming. The beamforming may include analog beamforming and digital beamforming (e.g., precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). Also, as a configuration for each reference signal, an IE may be used such as a CSI-RS resource or an SRS-resource, etc., and this configuration may include information associated with a beam. The information associated with the beam may refer to whether a corresponding configuration (e.g., CSI-RS resource) uses the same spatial domain filter as another configuration (e.g., another CSI-RS resource within the same CSI-RS resource set), or whether it uses a different spatial domain filter, or which reference signal is quasi-co-located (QCL), or when it is QCL, what type (e.g., QCL type A, B, C, or D) is.

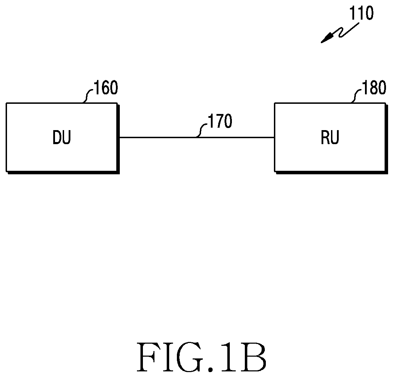

In the related art, in a communication system in which a cell radius of a base station is relatively large, each base station was installed to include functions of a digital processing unit (or a digital unit (DU)) and a radio frequency (RF) processing unit (or a radio unit (RU)). However, as a high frequency band is used in 4^{th} generation (4G) and/or beyond communication systems, and the cell radius of the base station decreases, the number of base stations to cover a specific area has increased, and the installation cost burden of operators to install the increased base stations has increased. To minimize the installation cost of the base station, a structure has been proposed in which the DU and RU of the base station are separated, and one or more RUs are connected to one DU through a wired network, and one or more geographically distributed RUs are deployed to cover a specific area. Hereinafter, an arrangement structure, and extension examples, of the base station of various embodiments of the present disclosure are described with reference to FIG. 1B.

FIG. 1B illustrates an example of a fronthaul structure based on functional split of a base station according to various embodiments of the present disclosure. Unlike backhaul between a base station and a core network, fronthaul refers to a connection of entities between a wireless LAN and the base station.

Referring to FIG. 1B, the base station 110 may include a DU 160 and an RU 180. Fronthaul 170 between the DU 160 and the RU 180 may be operated through an Fₓ interface. For operation of the fronthaul 170, an interface such as an enhanced common public radio interface (eCPRI) and a radio over Ethernet (ROE) may be used.

As a communication technology develops, mobile data traffic increases, and accordingly, a bandwidth requirement for fronthaul between a digital unit and a radio unit has greatly increased. In arrangement such as a centralized/cloud radio access network (C-RAN), the DU may be implemented to perform functions for a packet data convergence protocol (PDCP), a radio link control (RLC), a media access control (MAC), and physical (PHY), and the RU may be implemented to perform more functions for a PHY layer in addition to a radio frequency (RF) function.

The DU 160 may be in charge of upper layer functions of a wireless network. For example, the DU 160 may perform a function of a MAC layer and a part of a PHY layer. Here, the part of the PHY layer is performed at a higher level among the functions of the PHY layer, and may include, for example, channel encoding (or channel decoding), scrambling (or descrambling), modulation (or demodulation), and layer mapping (or layer demapping). According to an embodiment, when the DU 160 complies with the O-RAN standard, it may be referred to as an O-DU (O-RAN DU). The DU 160 may be replaced with, and expressed as, a first network entity for the base station (e.g., gNB) according to need, in embodiments of the present disclosure.

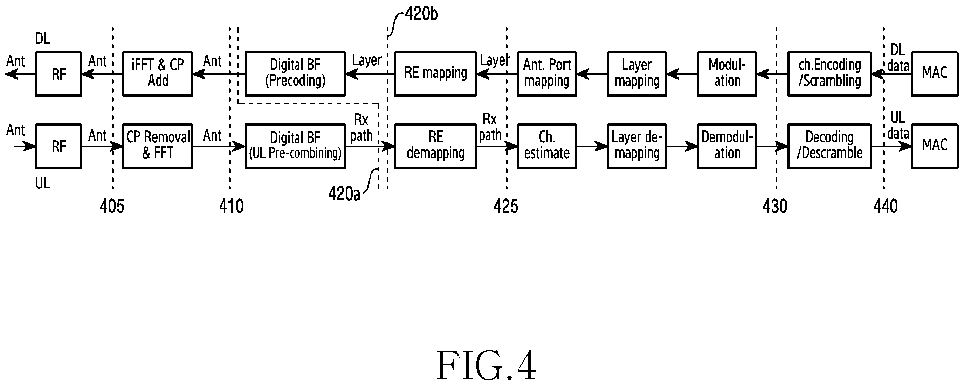

The RU 180 may be in charge of lower layer functions of the wireless network. For example, the RU 180 may perform a part of a PHY layer, and an RF function. Here, the part of the PHY layer is performed at a relatively lower level than the DU 160 among the functions of the PHY layer, and may include, for example, IFFT transform (or FFT transform), CP insertion (CP removal), and digital beamforming. An example of this specific function split is described in detail in FIG. 4. The RU 180 may be referred to as `access unit (AU)', `access point (AP)', 'transmission/reception point (TRP)', `remote radio head (RRH)', `radio unit (RU)' or other terms having an equivalent technical meaning. According to an embodiment, when the RU 180 complies with the O-RAN standard, it may be referred to as an O-RU (O-RAN RU). The DU 180 may be replaced with, and expressed as, a second network entity for the base station (e.g., gNB) according to need, in embodiments of the present disclosure.

Although FIG. 1B illustrates that the base station includes the DU and the RU, various embodiments of the present disclosure are not limited thereto. In some embodiments, the base station may be implemented as a distributed deployment of a centralized unit (CU) configured to perform functions of upper layers (e.g., packet data convergence protocol (PDCP) and RRC) of an access network and a distributed unit (DU) configured to perform functions of lower layers. In this case, the distributed unit (DU) may include the digital unit (DU) and the radio unit (RU) of FIG. 1A. Between a core (e.g., 5G core (5GC) or next generation core (NGC)) network and a wireless network (RAN), the base station may be implemented in a structure in which the CU, the DU, and the RU are arranged in order. An interface between the CU and the distributed unit (DU) may be referred to as an F1 interface.

The centralized unit (CU) may be connected to one or more DUs, and be in charge of functions of upper layers than the DU. For example, the CU may be in charge of functions of radio resource control (RRC) and packet data convergence protocol (PDCP) layers, and the DU and RU may be in charge of functions of lower layers. The DU may perform some functions (high PHY) of radio link control (RLC), media access control (MAC), and physical (PHY) layers, and the RU may perform other functions (low PHY) of the PHY layer. Also, as an example, the digital unit (DU) may be included in the distributed unit (DU) according to a distributed deployment implementation of the base station. Hereinafter, unless otherwise defined, operations of the digital unit (DU) and the RU will be described, but various embodiments of the present disclosure may be applied to all of a base station deployment including the CU or a deployment in which the DU is directly connected to a core network without the CU (i.e., the CU and the DU are integrated into one entity and implemented).

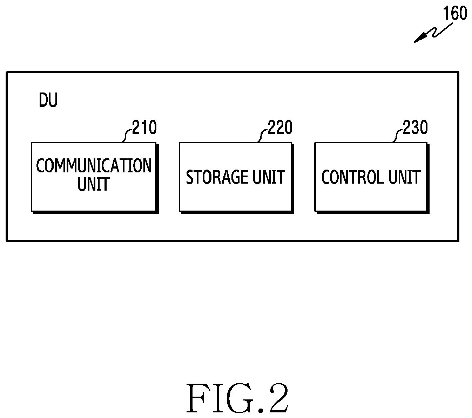

FIG. 2 illustrates a construction of a digital unit (DU) in a wireless communication system according to an embodiment of the present disclosure. The construction illustrated in FIG. 2 may be understood as a construction of the DU 160 of FIG. 1B as a part of the base station. Terms such as `...unit', `...part', etc. used below refer to a unit that processes at least one function or operation, and this may be implemented by hardware or software, or a combination of hardware and software.

Referring to FIG. 2, the DU 160 includes a communication unit 210, a storage unit 220, and a control unit 230.

The communication unit 210 may perform functions for transmitting and receiving signals in a wired communication environment. The communication unit 210 may include a wired interface for controlling a direct connection between devices through a transmission medium (e.g., a copper wire or an optical fiber). For example, the communication unit 210 may transmit an electrical signal to another device through a copper wire, or perform conversion between an electrical signal and an optical signal. The communication unit 210 may be connected to a radio unit (RU). The communication unit 210 may be connected to a core network or be connected to a CU of distributed deployment.

The communication unit 210 may perform functions for transmitting and receiving signals in the wireless communication environment. For example, the communication unit 210 may perform a conversion function between a baseband signal and a bit stream according to the physical layer standard of the system. For example, when data is transmitted, the communication unit 210 provides complex symbols by encoding and modulating a transmission bit stream. Also, when data is received, the communication unit 210 restores a received bit stream by demodulating and decoding a baseband signal. Also, the communication unit 210 may include a plurality of transmit/receive paths. Also, according to an embodiment, the communication unit 210 may be connected to a core network or be connected to other nodes (e.g., integrated access backhaul (IAB)).

The communication unit 210 may transmit and receive signals. To this end, the communication unit 210 may include at least one transceiver. For example, the communication unit 210 may transmit a synchronization signal, a reference signal, system information, a message, a control message, a stream, control information, or data, etc. Also, the communication unit 210 may perform beamforming.

The communication unit 210 transmits and receives signals as described above. Accordingly, all or part of the communication unit 210 may be referred to as `transmitting unit', `receiving unit' or `transceiving unit'. Also, in the following description, transmission and reception performed through a wireless channel are used to mean that the above-described processing is performed by the communication unit 210.

Although not illustrated in FIG. 2, the communication unit 210 may further include a backhaul communication unit for connecting to a core network or another base station. The backhaul communication unit provides an interface for communicating with other nodes in the network. That is, the backhaul communication unit converts a bit stream transmitted from a base station to another node, for example, another access node, another base station, an upper node, a core network, etc., into a physical signal, and converts a physical signal received from another node into a bit stream.

The storage unit 220 stores data such as a basic program for operation of the DU 160, an application program, setting information, and the like. The storage unit 220 may include a memory. The storage unit 220 may include a volatile memory, a non-volatile memory, or a combination of volatile and non-volatile memories. And, the storage unit 220 provides the stored data according to a request of the control unit 230.

The control unit 230 controls overall operations of the DU 160. For example, the control unit 230 transmits and receives signals through the communication unit 210 (or through the backhaul communication unit). Also, the control unit 230 writes data in the storage unit 220, and reads the data from the storage unit 220. And, the control unit 230 may perform functions of a protocol stack required by the communication standards. To this end, the control unit 230 may include at least one processor.

According to an embodiment, the control unit 230 may include a message setting unit. The message setting unit included in the control unit 230 may set a section extension field. The control unit 230 may control a transceiver to transmit a control message to the RU 170. According to an embodiment, the control unit 230 may control the DU 160 to perform operations of an embodiment described later.

The construction of the DU 160 illustrated in FIG. 2 is only an example, and an example of a DU performing an embodiment of the present disclosure is not limited to the construction illustrated in FIG. 2. According to an embodiment, some constructions may be added, deleted, or changed.

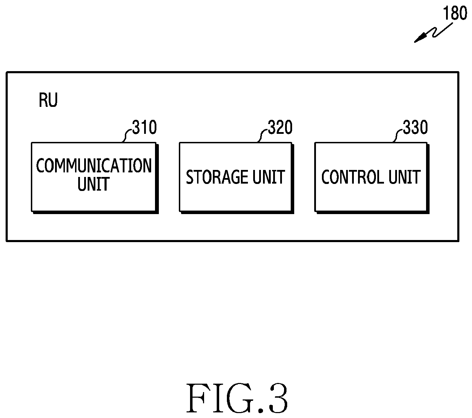

FIG. 3 illustrates a construction of a radio unit (RU) in a wireless communication system according to an embodiment of the present disclosure. The construction illustrated in FIG. 3 may be understood as a construction of the RU 180 of FIG. 1B as a part of the base station. Terms such as `...unit', `...part', etc. used below refer to a unit that processes at least one function or operation, and this may be implemented by hardware or software, or a combination of hardware and software.

Referring to FIG. 3, the RU 180 includes a communication unit 310, a storage unit 320, and a control unit 330.

The communication unit 310 performs functions for transmitting and receiving signals through a wireless channel. For example, the communication unit 310 up-converts a baseband signal into an RF band signal and transmits the signal through an antenna, and down-converts an RF band signal received through the antenna into a baseband signal. For example, the communication unit 310 may include a transmission filter, a reception filter, an amplifier, a mixer, an oscillator, a digital-to-analog converter (DAC), an analog-to-digital converter (ADC), and the like.

Also, the communication unit 310 may include a plurality of transmit/receive paths. Further, the communication unit 310 may include an antenna unit. The communication unit 310 may include at least one antenna array composed of a plurality of antenna elements. In terms of hardware, the communication unit 310 may include a digital circuit and an analog circuit (e.g., a radio frequency integrated circuit (RFIC)). Here, the digital circuit and the analog circuit may be implemented in one package. Also, the communication unit 310 may include a plurality of RF chains. The communication unit 310 may perform beamforming. The communication unit 310 may apply a beamforming weight to a signal to be transmitted and received in order to give the signal a directivity according the setting of the control unit 330. According to an embodiment, the communication unit 310 may include a radio frequency (RF) block (or RF unit).

Also, the communication unit 310 may transmit and receive signals. To this end, the communication unit 310 may include at least one transceiver. The communication unit 310 may transmit a downlink signal. The downlink signal may include a synchronization signal (SS), a reference signal (RS) (e.g., cell-specific reference signal (CRS) and demodulation (DM)-RS), system information (e.g., MIB, SIB, remaining system information (RMSI), and other system information (OSI)), a configuration message, control information, or downlink data, etc. Also, the communication unit 310 may receive an uplink signal. The uplink signal may include a random access related signal (e.g., random access preamble (RAP) (or message 1 (Msg1)), and message 3 (Msg3)), a reference signal (e.g., sounding reference signal (SRS) and DM-RS), or a power headroom report (PHR), etc.

The communication unit 310 transmits and receives signals as described above. Accordingly, all or part of the communication unit 310 may be referred to as `transmitting unit', `receiving unit', `transceiving unit' or 'transceiver'. Also, in the following description, transmission and reception performed through a wireless channel are used to mean that the above-described processing is performed by the communication unit 310.

The storage unit 320 stores data such as a basic program for operation of the RU 180, an application program, setting information, and the like. The storage unit 320 may consist of a volatile memory, a non-volatile memory, or a combination of volatile and non-volatile memories. And, the storage unit 320 provides the stored data according to a request of the control unit 330. According to an embodiment, the storage unit 320 may include a memory for a condition, command, or setting value related to an SRS transmission scheme.

The control unit 330 controls overall operations of the RU 180. For example, the control unit 330 transmits and receives signals through the communication unit 310. Also, the control unit 330 writes data in the storage unit 320, and reads the data from the storage unit 320. Also, the control unit 330 may perform functions of a protocol stack required by communication standards. To this end, the control unit 330 may include at least one processor. In some embodiments, the control unit 330 may be configured to receive a control message including a section extension field set by the DU. Also, in some embodiments, the control unit 330 may be configured to receive a parameter related to mixed-numerology, through the control message. According to an embodiment, the control unit 330 may control the RU 170 to perform operations of an embodiment described later.

FIG. 4 illustrates an example of function split in a wireless communication system according to an embodiment of the present disclosure. As a wireless communication technology advances (e.g., the introduction of a 5^{th} generation (5G) communication system (or new radio (NR) communication system)), a frequency band used has further increased, and as a cell radius of a base station has become very small, the number of RUs required to be installed has more increased. Also, in the 5G communication system, an amount of transmitted data has increased by more than 10 times, and a transmission capacity of a wired network transmitted to fronthaul has greatly increased. For these reasons, the installation cost of the wired network may increase significantly. Therefore, in order to lower the transmission capacity of the wired network and reduce the installation cost of the wired network, techniques for lowering the transmission capacity of the wired network transmitted to the fronthaul by transferring some functions of a modem of a DU to the RU have been proposed, and these techniques may be referred to as `function split' .

In order to reduce the burden of the DU, a way of extending a role of the RU being in charge of only an RF function to some functions of a physical layer is considered. In this case, as the RU performs functions of an upper layer, a throughput of the RU increases and thus a transmission bandwidth in fronthaul increases and at the same time, delay time requirement constraints caused by response processing may be lowered. On the other hand, as the RU performs the functions of the upper layer, a virtualization gain decreases, and a size/weight/cost of the RU increases. Considering the trade-off of the advantages and disadvantages described above, it is required to implement optimal function split.

Referring to FIG. 4, function splits in a physical layer below a MAC layer are shown. In downlink (DL) transmitting a signal to a terminal through a wireless network, a base station may sequentially perform channel encoding/scrambling, modulation, layer mapping, antenna mapping, RE mapping, digital beamforming (e.g., precoding), IFFT transform/CP add, and RF conversion. In uplink (UL) receiving a signal from the terminal through the wireless network, the base station may sequentially perform RF conversion, FFT transform/CP removal, digital beamforming (pre-combining), RE demapping, channel estimation, layer demapping, demodulation, and decoding/descrambling. Split of uplink functions and downlink functions may be defined in various types by a need between vendors, discussions on standards, and the like according to the above-described trade-off.

A first function split 405 may be a split of an RF function and a PHY function. The first function split is that the PHY function in the RU is not substantially implemented, and may be referred to as Option 8, for example. A second function split 410 allows the RU to perform IFFT transform/CP add in downlink (DL) of the PHY function and FFT transform/CP removal in uplink (LTL), and allows the DU to perform the remaining PHY functions. For example, the second function split 410 may be referred to as Option 7-1. A third function split 420a allows the RU to perform IFFT transform/CP insertion in DL of the PHY function and perform FFT transform/CP removal and digital beamforming in UL, and allows the DU to perform the remaining PHY functions. For example, the third function split 420a may be referred to as Option 7-2x Category A. A fourth function split 420b allows the RU to perform up to digital beamforming in all of DL and UL, and allows the DU to perform upper PHY functions after digital beamforming. For example, the fourth function split 420b may be referred to as Option 7-2x Category B. A fifth function split 425 allows the RU to perform RE mapping (or RE demapping) in all of DL and UL, and allows the DU to perform upper PHY functions after RE mapping (or RE demapping). For example, the fifth function split 425 may be referred to as Option 7-2. A sixth function split 430 allows the RU to perform up to modulation (or demodulation) in all of DL and UL, and allows the DU to perform subsequent upper PHY functions up to modulation (or demodulation). For example, the sixth function split 430 may be referred to as Option 7-3. A seventh function split 440 allows the RU to perform encoding/scrambling (or decoding/descrambling) in all of DL and UL, and allows the DU to perform subsequent upper PHY functions up to modulation (or demodulation). For example, the seventh function split 440 may be referred to as Option 6.

According to an embodiment, when large-capacity signal processing such as FR1 massive MIMO unit (MMU) is expected, function split in a relatively high layer (e.g., the fourth function split 420b) may be required to reduce fronthaul capacity. Also, because a control interface becomes complex and a large number of PHY processing blocks are included in the RU, function split in a too high layer (e.g., the sixth function split 430) may cause a burden on the implementation of the RU, so appropriate function split may be required according to a deployment and implementation scheme of the DU and the RU.

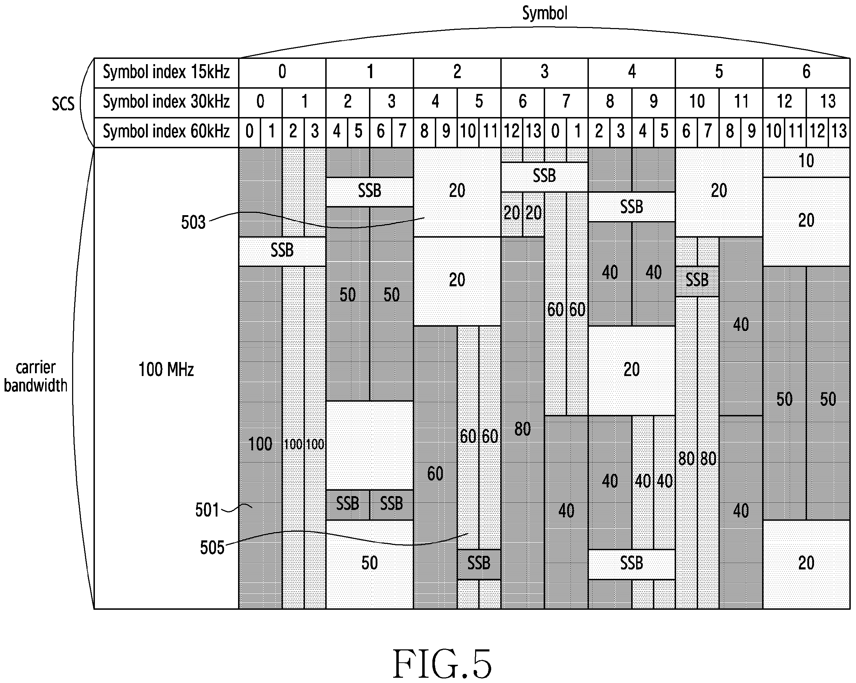

According to an embodiment, when the precoding of data received from the DU cannot be processed (i.e., when there is a limit to a precoding capability of the RU), the third function split 420a or lower function split (e.g., the second function split 410) may be applied. Inversely, when there is an ability to process the precoding of data received from the DU, the fourth function split 420b or higher function split (e.g., the sixth function split 430) may be applied. Hereinafter, in the present disclosure, an embodiment is described based on the third function split 420a (category A) or the fourth function split 420b (category B) for performing the beamforming process in the RU unless limited otherwise, but do not exclude a construction of an embodiment through other function splits. The functional construction, signaling, or operation of FIG. 5 to FIG. 7 described later may be applied not only to the third function split 420a or fourth function split 420b but also to other function splits.

In an embodiment of the present disclosure, the standards of eCPRI and O-RAN as a fronthaul interface at message transmission between a DU (e.g., the DU 160 of FIG. 1B) and an RU (e.g., the RU 180 of FIG. 1B) are exemplarily described. An eCPRI header, an O-RAN header, and additional fields may be included in an Ethernet payload of a message. Hereinafter, an embodiment of the present disclosure is described using standard terms of eCPRI or O-RAN, but other expressions having equivalent meanings to each term may be substituted and used in an embodiment of the present disclosure.

As a transport protocol of fronthaul, Ethernet and eCPRI, which are easy to share with a network, may be used. The eCPRI header and the O-RAN header may be included in the Ethernet payload. The eCPRI header may be positioned in front of the Ethernet payload. The contents of the eCPRI header are given as follows.
- ecpriVersion (4 bits): 0001b (fixed value)
- ecpriReserved (3 bits): 0000b (fixed value)
- ecpriConcatenation (1 bit): 0b (fixed value)
- ecpriMessage (1 byte): Message type
- ecpriPayload (2 bytes): Payload size in bytes
- ecpriRtcid / ecpriPcid (2 bytes): x, y, z may be constructed through a management plane (M-plane). The corresponding field may indicate a transmission path (extended antenna-carrier (eAxC) in eCPRI) of a control message of various embodiments during multi-layer transmission.
- CU_Port_ID (x bits): Classifying channel card. Possible to distinguish including up to modem (2 bits for channel card, and 2 bits for modem)
- BandSector_ID (y bits): Classifying according to cell/sector
- CC_ID (z bits): Classifying according to component carrier
- RU_Port_ID (w bits): Classifying according to layer, T, antenna, etc.
- ecpriSeqid (2 bytes): Sequence ID is managed for each ecpriRtcid/ecpriPcid, and sequence ID and subsequence ID are separately managed. When subsequence ID is used, radio-transport-level fragmentation is possible (different from application-level fragmentation)

An application protocol of fronthaul may include a control plane (C-plane), a user plane (U-plane), a synchronization plane (S-plane), and a management plane (M-plane).

The control plane may be constructed to provide scheduling information and beamforming information through a control message. The user plane may include user downlink data (IQ data or synchronization signal block (SSB)/RS), uplink data (IQ data or SRS/RS), or physical random access channel (PRACH) data. A weight vector of the beamforming information described above may be multiplied by the user data. The synchronization plane may be related to timing and synchronization. The management plane may be related to initial setup, non-realtime reset or reset, and non-realtime report.

To define the type of a message transmitted in the control plane, section types are defined. The section types may indicate the purpose of a control message transmitted on the control plane. For example, the purpose of each section type is given as follows.
- sectionType=0: DL idle/guard periods - the purpose of Tx blanking for power saving
- sectionType=1: mapping BF index or weight (O-RAN mandatory beamforming (BF) scheme) to RE of DL/UL channel
- sectionType=2: reserved
- sectionType=3: mapping beamforming index or weight to PRACH and resource element (RE) of mixed-numerology channel
- sectionType=4: reserved
- sectionType=5: delivering UE scheduling information wherein RU may determine realtime BF weight (O-RAN optional BF scheme)
- sectionType=6: periodically delivering UE channel information wherein RU may determine realtime BF weight (O-RAN optional BF scheme)
- sectionType=7: used for LAA support

In the present disclosure, 'numerology' is used as a term meaning a variable or a set of variables related to a structure of a physical signal. Numerology may indicate at least one of various variables causing a change of a physical signal, such as subcarrier spacing, symbol duration, cyclic prefix (CP) duration, fast Fourier transform (FFT), sampling rate, subframe length, frame length, etc. Accordingly, 'mixed-numerology' means a situation in which various physical structures coexist, and 'supporting mixed-numerology' means that one base station or system provides different physical structures. Accordingly, `numerology' may be referred to as 'signal configuration', `physical layer configuration', `frame configuration', `configuration', 'signal structure', `physical layer structure', `frame structure' or another name having a technical meaning equivalent thereto.

In NR, as a frequency band used increases, signaling between a terminal and a base station is performed in a broadband. Due to limitations in terminal capabilities, there may be cases in which signaling in such a broadband may not be supported. To compensate for this, the concept of a bandwidth part (BWP) has been introduced. The BWP may be defined as a contiguous set of physical resource blocks (PRBs) selected from a contiguous set of common resource blocks (CRBs) in a given carrier and a given numerology.

For signaling, multiple BWPs may be set, and numerology may be individually set for each of the multiple BWPs. The common resource block may be indexed (starting from 0) from the lowest frequency of a carrier band, and a resource grid based on the common resource block may be defined. The bandwidth part may be indicated based on a CRB having the lowest index, and CRB 0 having the lowest index may be referred to as point A. The BWP defined within the common resource block may be defined according to a distance from point A, that is, an offset value and the number of physical resource blocks (PRB) occupied by the bandwidth part.

A subcarrier spacing (SCS) means a width of a frequency occupied by one symbol. The subcarrier spacing and a symbol duration have an inversely proportional relationship, and an appropriate SCS may be set according to channel conditions and types of provided services. The SCS means a subcarrier spacing. In an orthogonal frequency division multiplex (OFDM) system, a frequency interval of one modulation symbol corresponds to the subcarrier spacing. A base station performing resource allocation may determine an FFT size according to the number of subcarriers of a bandwidth dependent on the SCS. That is, the SCS is related to the FFT size.

A mixed-numerology system or multiple numerologies system may refer to a system in which multiple numerologies exist within one carrier bandwidth. The mixed-numerology system may mean that, when several bandwidth parts (BWPs) exist within one carrier bandwidth, numerologies (e.g., sub-carrier spacing (SCS)) corresponding to the respective BWPs are different from each other.

NR aims at ultra reliable and low latency communications (URLLC) in data transmission. Mixed-numerology is an example that may support URLLC, and may variously configure numerology to adaptively adjust a symbol interval for URLLC.

FIG. 5 illustrates an example of a BWP construction according to an embodiment of the present disclosure. This is only an embodiment, and the BWP construction of a symbol shown in FIG. 5 does not limit the scope of the present disclosure. The example of the BWP construction when a carrier bandwidth is 100 MHz is illustrated. A bandwidth value of a BWP may be multiple (e.g., 100 MHz, 80 MHz, 50 MHz, 40 MHz, 20 MHz, and 10 MHz), and a symbol may vary according to a numerology value (e.g., 15 kHz, 30 kHz, and 60 kHz).

Referring to FIG. 5, the 100 MHz carrier bandwidth may consist of one or more BWPs per symbol. The BWP construction may be expressed in different sizes and positions every symbol of corresponding numerologies. As shown in FIG. 5, an SSB may also have numerology different from numerology of the corresponding BWP, and this case may also correspond to an example of mixed-numerology.

For example, a DU may determine 30 kHz as a nominal numerology through a management plane (M-plane) in a cell setting step. A first symbol 501 may be composed of a BWP having a numerology value of 30 kHz and having a bandwidth of 100 MHz. A second symbol 503 may be composed of a BWP having a numerology value of 15 kHz and a bandwidth of 20 MHz. A third symbol 505 may be composed of a BWP having a numerology value of 60 kHz and a bandwidth of 60 MHz. A mixed-numerology system may mean a system in which, besides the BWP having the nominal numerology (30Khz) such as the first symbol 501, numerology different from the respective nominal numerologies such as the second symbol 503 and the third symbol 505 is used, within one carrier bandwidth.

For signal transmission through xRAN/ORAN-based fronthaul, the mixed-numerology as in the above example may be set. When the mixed-numerology is set, the DU needs to transmit information related to the mixed-numerology to an RU. The information related to the mixed-numerology may include information related to an SCS, an FFT size, a cyclic prefix (CP) duration, a BWP size, and a BWP position (frequency offset) within a frequency. In the cell setting step, the DU may determine one numerology value as a nominal numerology. Also, the FFT size and the CP duration determined according to the nominal numerology may also be determined as nominal values.

To define the type of message transmitted in a control plane, a section type is defined. The section type may be divided according to the purpose of the message.

For example, a section type 3 may be used for a message for transmitting information on a PRACH and a mixed-numerology channel. Specifically, the information included in the section type 3 is as follows.

### Common Header Fields

- dataDirection (data direction (gNB Tx/Rx)) field: 1 bit
- payloadVersion (payload version) field: 3 bits
- value = "1" shall be set (1 st protocol version for payload and time reference format)
- filterIndex (filter index) field: 4 bits
- frameId (frame identifier) field: 8 bits
- subframeId (subframe identifier) field: 4 bits
- slotID (slot identifier) field: 6 bits
- startSymbolid (start symbol identifier) field: 6 bits
- numberOfsections (number of sections) field: 8 bits
- sectionType (section type) field: 8 bits
- value = "3" shall be set
- timeOffset (time offset) field: 16 bits
- frameStructure (frame structure) field: 8 bits
- cpLength (cyclic prefix length) field: 16 bits
- udCompHdr (user data compression header) field: 8 bits
- Section Fields
- sectionID (section identifier) field: 12 bits
- rb (resource block identifier) field: 1 bit
- symInc (symbol number increment command) field: 1 bit
- startPrbc (starting PRB of data section description) field: 10 bits
- numPrbc (number of contiguous PRBs per data section description) field: 8 bits
- reMask (resource element mask) field: 12 bits
- numSymbol (number of symbols) field: 4 bits
- ef (extension flag) field: 1 bit
- beamId (beam identifier) field: 15 bits
- freqOffset (frequency offset) field: 24 bits
- reserved (reserved for future use) field: 8 bits

A section type 1 may be used for mapping a BF index or weight (O-RAN mandatory beamforming (BF) scheme) to a RE of a DL/LTL channel, and may include the following information.

### Common Header Fields

- dataDirection (data direction (gNB Tx/Rx)) field: 1 bit
- payloadVersion (payload version) field: 3 bits
- value = "1" shall be set (1 st protocol version for payload and time reference format)
- filterIndex (filter index) field: 4 bits
- frameId (frame identifier) field: 8 bits
- subframeId (subframe identifier) field: 4 bits
- slotID (slot identifier) field: 6 bits
- startSymbolid (start symbol id) field: 6 bits
- numberOfsections (number of sections) field: 8 bits
- sectionType (section type) field: 8 bits
- value = "1" shall be set
- udCompHdr (user data compression header) field: 8 bits
- reserved (reserved for future use) field: 8 bits

### Section Fields

- sectionId (section identifier) field: 12 bits
- rb (resource block identifier) field: 1 bit
- symInc (symbol number increment command) field: 1 bit
   startPrbc (starting PRB of data section description) field: 10 bits
- numPrbc (number of contiguous PRBs per data section description) field: 8 bits
- reMask (resource element mask) field: 12 bits
- numSymbol (number of symbols) field: 4 bits
- ef (extension flag) field: 1 bit
- beamId (beam identifier) field: 15 bits

A section type 5 may be used for delivering UE scheduling information (O-RAN optional BF scheme) so that the RU may determine a BF weight in real time, and specifically, the second type 5 may include the following information.

### Common Header Fields

- dataDirection (data direction (gNB Tx/Rx)) field: 1 bit
- payloadVersion (payload version) field: 3 bits
- value = "1" shall be set (1 st protocol version for payload and time reference format)
- filterIndex (filter index) field: 4 bits
- frameId (frame identifier) field: 8 bits
- subframeId (subframe identifier) field: 4 bits
- slotID (slot identifier) field: 6 bits
- startSymbolid (start symbol identifier) field: 6 bits
- numberOfsections (number of sections) field: 8 bits
- sectionType (section type) field: 8 bits
- value = "5" shall be set
- udCompHdr (user data compression header) field: 8 bits
- reserved (reserved for future use) field: 8 bits

### Section Fields

- sectionID (section identifier) field: 12 bits
- rb (resource block identifier) field: 1 bit
- symInc (symbol number increment command) field: 1 bit
- startPrbc (starting PRB of data section description) field: 10 bits
- numPrbc (number of contiguous PRBs per data section description) field: 8 bits
- reMask (resource element mask) field: 12 bits
- numSymbol (number of symbols) field: 4 bits
- ef (extension flag) field: 1 bit
- ueId (UE identifier) field: 15 bits

A section type 6 may be used for periodically delivering UE channel information (O-RAN optional BF scheme) so that the RU may determine a BF weight in real time, and specifically, the section type 6 may include the following information.

### Common Header Fields

- dataDirection (data direction (gNB Tx/Rx)) field: 1 bit
- payloadVersion (payload version) field: 3 bits
- value = "1" shall be set (1 st protocol version for payload and time reference format)
- filterIndex (filter index) field: 4 bits
- frameId (frame identifier) field: 8 bits
- subframeId (subframe identifier) field: 4 bits
- slotID (slot identifier) field: 6 bits
- startSymbolid (start symbol identifier) field: 6 bits
- numberOfsections (number of sections) field: 8 bits
- sectionType (section type) field: 8 bits
- value = "6" shall be set
- numberOfUEs (number of UE-specific channel information data sets) field: 8 bits
- reserved (reserved for future use) field: 8 bits

### Section Fields

- ef (extension flag) field: 1 bit
- ueId (UE identifier) field: 15 bits
- regularizationFactor (regularization factor used for MMSE reception) field: 16 bits
- reserved (reserved for future use) field: 4 bits
- rb (resource block identifier) field: 1 bit
- symInc (symbol number increment command) field: 1 bit
- startPrbc (starting PRB of data section description) field: 10 bits
- numPrbc (number of contiguous PRBs per data section description) field: 8 bits
- ciIsample (channel information value, in-phase sample) field: 16 bits
- ciQsample (channel information value, quadrature sample) field: 16 bits

When transmitting information to the RU through an allocation region or BWP using only a predetermined nominal numerology in the cell setting step, the DU may transmit the information to the RU through the C-plane section types 1, 5, and 6. When transmitting information to the RU through an allocation region or BWP using other numerology rather than the nominal numerology predetermined in the cell setting step, the DU may deliver the information to the RU through the C-plane section type 3, and the C-plane section type 3 may include information related to a value related to the other numerology, an FFT size, and a position in a frequency domain. In other words, when the mixed-numerology is used, the DU may use the C-plane section type 3 in order to deliver the information through the other numerology rather than the nominal numerology.

However, as illustrated in FIG. 5, allocation information using the nominal numerology, the FFT size of the BWP, or the position on the frequency may be allocated differently from a previous symbol and/or slot. When the allocation information using the nominal numerology, the FFT size of the BWP, or the position on the frequency is allocated differently from the previous symbol and/or slot, the allocation information must be sent through the C-plane section type 3. This is because, in the current standard, only the C-plane section type 3 includes information related to the FFT size of the BWP or the position (offset) on the frequency. In this case, the C-plane section type 3 must be sent from the DU to the RU by using a separate Ethernet message from the C-plane section type 1. This is because only one kind of C-plane section type should be sent through one Ethernet message.

In case that the allocation information using the nominal numerology, the FFT size of the BWP, or the position on the frequency is allocated differently from the previous symbol and/or slot, when the allocation information is transmitted in the C-plane section type 1, a situation may occur in which it is difficult to determine a new FFT size of the corresponding BWP and a position on a frequency. Resource block (RB) information delivered through the C-plane section type 1 corresponds to information that is configured based on a physical resource block (PRB). Since the PRB indicates an RB within one BWP, when several BWPs exist, it may be difficult to express a position of the BWP within the entire carrier bandwidth by using only the PRB value.

In addition, in case that the allocation information using the nominal numerology, the FFT size of the BWP, or the position on the frequency is allocated differently from the previous symbol and/or slot, when the allocation information is transmitted in the C-plane section type 5 or C-plane section type 6, a situation may occur in which it is difficult for the RU to determine a new FFT size of the corresponding BWP and a position on a frequency. The C-plane section types 1 and 3 may use only a beam ID based beamforming weight scheme, and the C-plane section types 5 and 6 may use only a user equipment (UE) ID based beamforming weight scheme. Since only the C-plane section type 3 may deliver the mixed-numerology related information as described above, when a specific RB or BWP uses the UE ID based beamforming weight scheme without using the nominal numerology, a situation may occur in which information (e.g., a numerology, an FFT size value, a position on a frequency, a CP duration, etc.) about the corresponding RB and BWP may not be determined through the C-plane section types 5 and 6. That is, in the system using the mixed-numerology, since it is difficult for the DU to transmit information to the RU through multiple BWPs by way of the C-plane section types 5 and 6, the C-plane section type 3 must be used, but since the C-plane section type 3 uses only the beam ID based beamforming weight scheme, a situation may occur in which it may be difficult for the DU to transmit, to the RU, UE ID based beamforming weight and channel related information which have to be delivered through the C-plane section types 5 and 6.

As described above, the information related to mixed-numerology is included only in the section type 3. Accordingly, when it is necessary to transmit the information related to the mixed-numerology, there is a problem.

For example, when a message is transmitted using the section type 1, there may be a case in which information is transmitted using mixed-numerology. In this case, there is a problem that, although the DU needs to transmit information related to other numerology to the RU, since the section type 1 does not include information capable of indicating numerology, the section type needs to be changed. When the section type is changed, the DU must configure and send a new Ethernet message. In this case, of course, the DU must construct another type of eCPRI header and include the header in front of an Ethernet payload. For another example, when a message is transmitted through the section type 5 or 6, there is a problem in that mixed-numerology cannot be supported. That is, information (e.g., UE ID based beamforming weight and channel related information related to MU-MIMO) capable of being transmitted through the section type 5 or the section type 6 may be used only when only one nominal numerology is used.

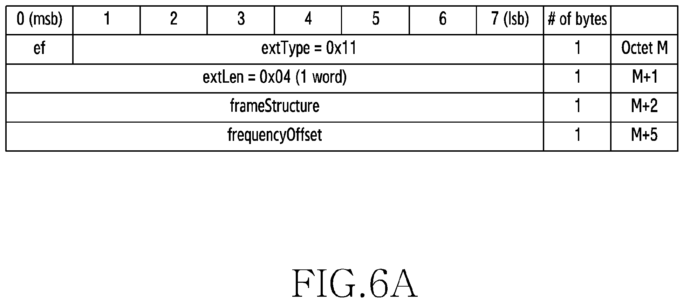

According to various embodiments of the present disclosure, there is an effect in which the DU provides the information related to the mixed-numerology to the RU through section extension without changing the section type, thereby reducing an overhead due to separate signaling. Also, there is an effect in which the UE ID based beamforming weight scheme may be used for MU-MIMO, in the system using the mixed-numerology. FIG. 6A to FIG. 6D illustrate various embodiments of providing the information related to the mixed-numerology through the section extension described above.

FIG. 6A to FIG. 6D illustrate examples of section extension information according to various embodiments of the present disclosure. FIG. 6A to FIG. 6D illustrate a frame format of a section extension for delivering mixed-numerology related information.

Referring to FIG. 6A to FIG. 6D, the section extension information may include various information for constructing mixed-numerology. The information for constructing the mixed-numerology may mean information for representing a resource allocation relationship according various SCSs in a frequency domain or time domain (e.g., relationship between BWPs having different SCSs shown in FIG. 5). According to an embodiment, the information for constructing the mixed-numerology may include information related to a frame structure. The information related to the frame structure may include information for indicating a subcarrier spacing, an FFT size, a CP duration and a resource grid, symbol position information, and the like.

The information for constructing the mixed-numerology may include frequency information. The information related to the frequency may include information for indicating a position of a bandwidth, and information related to a center frequency of a BWP, a position of the center frequency of the BWP in a resource grid or a frequency offset, etc.

The information for constructing the mixed-numerology may include time information. The information related to the frequency may include the number of symbols in a slot to which a BWP using the mixed-numerology is allocated, or symbol position information in the slot.

Referring to FIG. 6A, the information for constructing the mixed-numerology of an embodiment of the present disclosure may include extType, extLen, frameStructure, and frequencyOffset. The extType may indicate the type of extension. The ef means an extension flag, and when the ef is 1, it means that another extension field exists. The extLen may indicate a length of section extension. The frameStructure may define a frame structure. The frameStructure may be expressed with 8 bits, the first 4 bits may indicate the size of fast Fourier transform (FFT) / inverse fast Fourier transform (IFFT), and the second 4 bits may indicate a subcarrier spacing and the number of slots per subframe. The frequencyOffset may mean an offset value for indicating a position of a BWP included in a CRB.

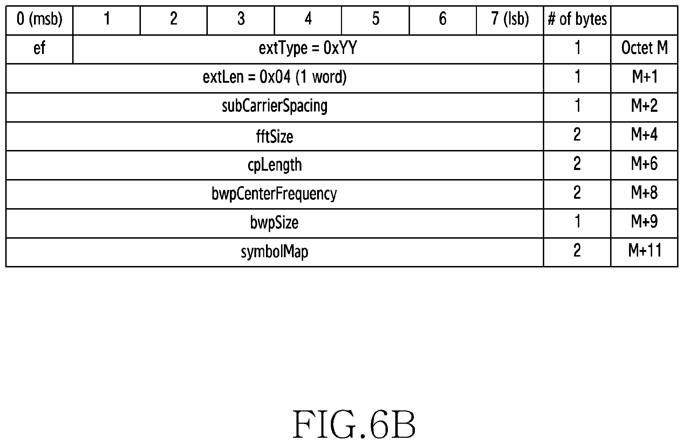

Referring to FIG. 6B, the information for constructing the mixed-numerology of an embodiment of the present disclosure may include extType, ef, extLen, subCarrierSpacing, fftSize, cpLength, bwpCenterFrequency, bwpSize, and symbolMap. The extType may indicate the type of extension. The ef means an extension flag, and when the ef is 1, it means that another extension field exists. The extLen may indicate a length of section extension. The subCarrierSpacing may indicate a subcarrier spacing value and the number of slots per subframe. The fftSize may mean a size value of fast Fourier transform (FFT) / inverse fast Fourier transform (IFFT). The cpLength may indicate a duration of a CP per symbol. The bwpCenterFrequency may mean a value of a center frequency of a BWP using the mixed-numerology. The bwpSize may indicate a size of the BWP using the mixed-numerology. The symbolMap may indicate a symbol position within a slot of the BWP using the mixed-numerology.

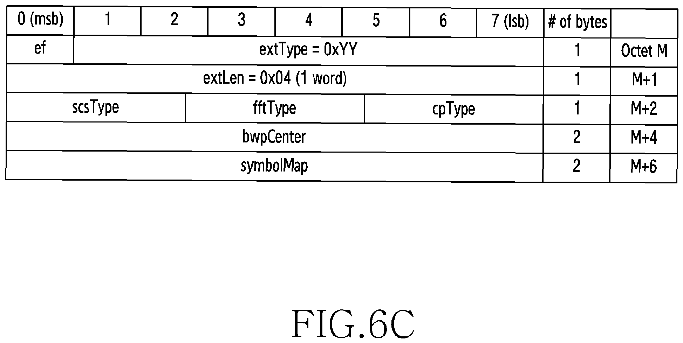

Referring to FIG. 6C, the information for constructing the mixed-numerology of an embodiment of the present disclosure may include extType, ef, extLen, scsType, fftType, cpType, bwpCenter, and symbolMap. The extType may indicate the type of extension. The ef means an extension flag, and when the ef is 1, it means that another extension field exists. The extLen may indicate a length of section extension. The scsType may be expressed with 3 bits, and may indicate a subcarrier spacing value and the number of slots per subframe. The fftType may be expressed with 3 bits, and may mean a size value of fast Fourier transform (FFT) / inverse fast Fourier transform (IFFT). The cpType may be expressed with 2 bits, and may indicate a duration of a CP per symbol as an index value of one of a normal short CP, a normal long CP, and an extended CP. The bwpCenter may indicate a position of a center frequency of a BWP using the mixed-numerology, as an RE value of a resource grid included in a CRB. The symbolMap may indicate a symbol position within a slot of the BWP using the mixed-numerology. Of course, a bit size of each parameter of the present embodiment may be larger or smaller than a value expressed in the present embodiment.

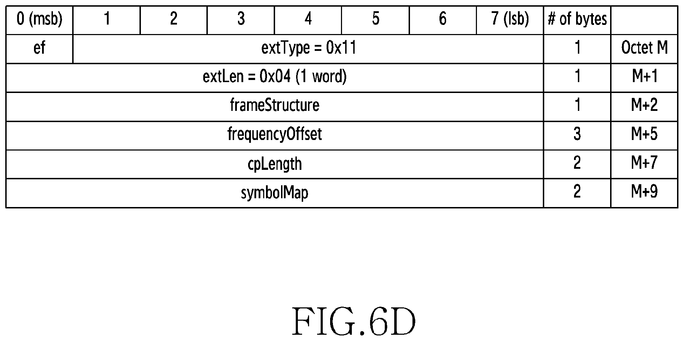

Referring to FIG. 6D, the information for constructing the mixed-numerology of an embodiment of the present disclosure may include extType, ef, extLen, frameStructure, frequencyOffset, cpLength, and symbolMap. The extType may indicate the type of extension. The ef means an extension flag, and when the ef is 1, it means that another extension field exists. The extLen may indicate a length of section extension. The frameStructure may define a frame structure. The frameStructure may be expressed with 8 bits, and the first 4 bits may indicate a size of fast Fourier transform (FFT)/inverse fast Fourier transform (IFFT), and the second 4 bits may indicate a subcarrier spacing and the number of slots per subframe. The frequencyOffset may mean an offset value for indicating a position of a BWP included in a CRB. The cpLength may indicate a duration of a CP per symbol. The symbolMap may indicate a symbol position within a slot of a BWP using mixed-numerology.

FIG. 6A to FIG. 6D described above are only the examples of the information for constructing the mixed-numerology of the present disclosure, and the scope of the disclosure is not limited thereto. In other words, the information for constructing the mixed-numerology of an embodiment of the present disclosure may be composed of a combination of some of the parameters described above.

As described above, in fronthaul using the xRAN/ORAN standard, in a system based on mixed-numerology, a DU must use a section type 3 in order to transmit information related to other numerology rather than a nominal numerology. The DU may use different section types according to the type and scheme of transmitted information, and when transmitting information through other section type rather than the section type 3, when the other numerology rather than the nominal numerology is constructed, the DU may not transmit information related to this through the other section type. Therefore, the DU needs to newly define a frame format of the other section type wherein it may information related to the other numerology rather than the nominal numerology even for the other section type.

In an embodiment, a section extension format may include additional information for mixed-numerology. The additional information may include parameters such as subCarrierSpacing, fftSize, cpLength, bwpCenterFrequency, bwpSize, and symbolMap.

In an embodiment, the section extension format may include additional information for mixed-numerology. The additional information may include parameters such as scsType, fftType, cpType, bwpCenter, and symbolMap. In an embodiment, the section extension format may include additional information for mixed-numerology. The additional information may include parameters such as frameStructure, frequencyoffset, cpLength, and symbolMap.

In an embodiment, the section extension format may include additional information for mixed-numerology. The additional information may include some of the parameters described above.

In an embodiment, the section extension format may be additionally defined in the section types 1, 5, and 6. By additionally defining a field for related information in the section types 1, 5, and 6 so as to deliver information on the mixed-numerology, when transmitting information through the section types 1, 5, and 6, the DU may transmit information related to numerology together, thereby omitting a process of separately transmitting the information related to the numerology through the section type 3. Accordingly, by omitting unnecessary signaling, efficient information transmission and reception between the DU and the RU may be presented.

For example, when the DU uses a beamforming scheme using a UE ID, the DU may send a control message to the RU through the section type 5. In this case, in the control message transmitted through the section type 5, when the other numerology rather than the nominal numerology is constructed, information related to the other numerology may be sent to the RU together with the UE ID.

For another example, when the DU intends to send information related to a channel state to the RU, the DU may send a control message to the RU through the section type 6. In this case, in the control message transmitted through the section type 6, when the other numerology rather than the nominal numerology is constructed, information related to the other numerology may be sent together with the channel state (ciIsample and ciQsample).

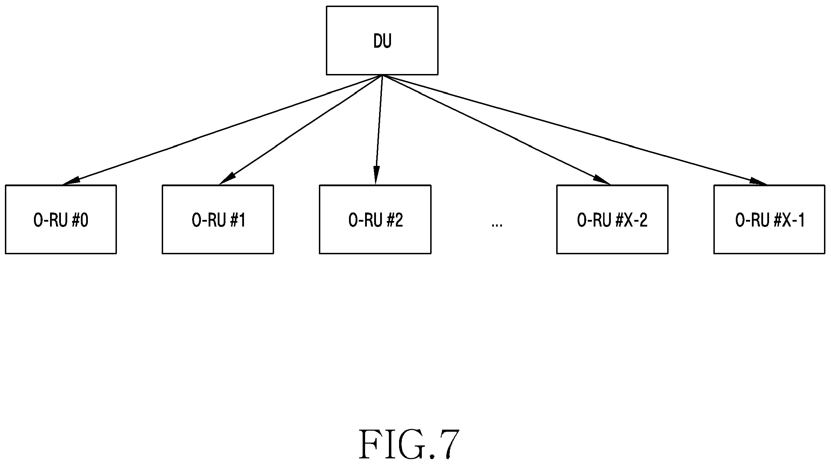

FIG. 7 illustrates an example of connection between a DU and RUs according to an embodiment of the present disclosure. The DU may be connected with various RUs. Each of various RUs may have different characteristic, performance, and capability.

Referring to FIG. 7, the DU may be connected to multiple RUs. In this case, since the RU complies with the O-RAN standard, the RU may be referred to as an O-RU. The DU may be connected with X number of O-RUs. The DU may be connected to O-RU #0, O-RU #1, O-RU #2,...., O-RU #X-1.

In an embodiment, some of the O-RUs may receive a control message including an extended section field set by the DU. In another embodiment, some of the O-RUs may receive some parameters among various parameters (subCarrierSpacing, fftSize, cpLength, bwpCenterFrequency, bwpSize, symbolMap or scsType, fftType, cpType, bwpCenter, symbolMap or frameStructure, frequencyoffset, cpLength, and symbolMap) of the above-described embodiment or parameters related thereto, as information included in the extended section field. In another embodiment, some of the O-RUs may receive some parameters different from those received by the aforementioned O-RUs or parameters related thereto. In a further embodiment, some of the O-RUs may receive all parameters. The DU may set this to each RU through a parameter of a control plane.

In the present disclosure, a DU for constructing mixed-numerology and an RU for constructing a resource allocation or resource grid according to the mixed-numerology have been described, but a structure in which the DU of the present disclosure is connected with RUs not supporting the mixed-numerology may be understood as an example of the present disclosure. That is, in an embodiment, some of the O-RUs may also receive a control message not including an extended section field for mixed-numerology as in the existing. That the DU identifies the RU not supporting the mixed-numerology and constructs the corresponding control message may also be understood as an embodiment of the present disclosure.

According to an embodiment of the present disclosure, a method of operating a digital unit (DU) in a wireless communication system may include the processes of setting a section extension field including additional information, and transmitting a first control message including the section extension field to a radio unit (RU) through a fronthaul interface. The first control message may be used for scheduling a terminal on a control plane.

In an embodiment, the additional information may include a parameter indicating information related to mixed-numerology.

In an embodiment, the method may further include the processes of setting the section extension field to include the parameter indicating the mixed-numerology related information, and transmitting a first control message including the section extension field including the parameter indicating the mixed-numerology related information. The first control message including the section extension field including the parameter indicating the mixed-numerology related information may be used for scheduling the terminal on the control plane.

In an embodiment, the first control message may correspond to a control message of section types 1, 5, and 6 of an open-radio access network (O-RAN), and the first control message may include scheduling information on the terminal.

In an embodiment, the parameter may include at least one of a subcarrier spacing (SCS) of a BWP constituting the mixed-numerology, a fast Fourier transform (FFT) size, a CP duration, a center frequency of the BWP, a size of the BWP, and a symbol map.

In an embodiment, the parameter may include at least one of a subcarrier spacing (SCS) of the BWP constituting the mixed-numerology, a fast Fourier transform (FFT) size, a duration of a CP, a symbol map, and a position of a center frequency of the BWP.

In an embodiment, the parameter may include at least one of a subcarrier spacing (SCS) of the BWP constituting the mixed-numerology, a fast Fourier transform (FFT) size, a duration of a CP, a symbol map, and a frequency offset value.

According to an embodiment of the present disclosure, a method of operating a radio unit (RU) in a wireless communication system may include the process of receiving a first control message including a section extension field from a digital unit (DU) through a fronthaul interface. The section extension field may include additional information, and the section extension field may be set by the DU, and the first control message may be used for scheduling a terminal on a control plane.

In an embodiment, the additional information may include a parameter indicating mixed-numerology related information.

In an embodiment, the method may further include the process of receiving a first control message including a section extension field including a parameter indicating mixed-numerology related information. The section extension field may be set to include the parameter indicating the mixed-numerology related information, and the first control message including the section extension field including the parameter indicating the mixed-numerology related information may be used for scheduling a terminal on a control plane.

In an embodiment, the first control message may correspond to a control message of section types 1, 5, and 6 of an open-radio access network (O-RAN), and the first control message may include scheduling information on the terminal.

In an embodiment, the parameter may include at least one of a subcarrier spacing (SCS) of a BWP constituting the mixed-numerology, a fast Fourier transform (FFT) size, a duration of a CP, a center frequency of the BWP, a size of the BWP, and a symbol map.

In an embodiment, the parameter may include at least one of the subcarrier spacing (SCS) of the BWP constituting the mixed-numerology, the fast Fourier transform (FFT) size, the duration of the CP, the symbol map, and a position of the center frequency of the BWP.

In an embodiment, the parameter may include at least one of the subcarrier spacing (SCS) of the BWP constituting the mixed-numerology, the fast Fourier transform (FFT) size, the duration of the CP, the symbol map, and a frequency offset value.

According to an embodiment of the present disclosure, a digital unit (DU) device in a wireless communication system may include a transceiver and at least one processor. The at least one processor may be configured to set a section extension field including additional information, and send a first control message including the section extension field to a radio unit (RU) through a fronthaul interface. The first control message may be used for scheduling a terminal on a control plane.

In an embodiment, the additional information may include a parameter indicating the mixed-numerology related information.

In an embodiment, the at least one processor is further configured to set the section extension field to include the parameter indicating the mixed-numerology related information, and send the first control message including the section extension field including the parameter indicating the mixed-numerology related information. The first control message including the section extension field including the parameter indicating the mixed-numerology related information may be used for scheduling a terminal on a control plane.

In an embodiment, the first control message may correspond to a control message of section types 1, 5, and 6 of an open-radio access network (O-RAN), and the first control message may include scheduling information on the terminal.

In an embodiment, the parameter may include at least one of a subcarrier spacing (SCS) of a BWP constituting the mixed-numerology, a fast Fourier transform (FFT) size, a duration of a CP, a center frequency of the BWP, a size of the BWP, and a symbol map.

In an embodiment, the parameter may include at least one of the subcarrier spacing (SCS) of the BWP constituting the mixed-numerology, the fast Fourier transform (FFT) size, the duration of the CP, a position of the center frequency of the BWP, and the symbol map.

In an embodiment, the parameter may include at least one of the subcarrier spacing (SCS) of the BWP constituting the mixed-numerology, the fast Fourier transform (FFT) size, the duration of the CP, a frequency offset value, and the symbol map.

According to an embodiment of the present disclosure, a radio unit (RU) device in a wireless communication system may include a transceiver and at least one processor. The at least one processor may be configured to receive a first control message including a section extension field from a digital unit (DU) through a fronthaul interface. The section extension field may include additional information, and the section extension field may be set by the DU, and the first control message may be used for scheduling a terminal on a control plane.

In an embodiment, the additional information may include a parameter indicating the mixed-numerology related information.

In an embodiment, the at least one processor may be further configured to receive the first control message including the section extension field including the parameter indicating the mixed-numerology related information. The section extension field may be set to include the parameter including the mixed-numerology related information, and the first control message including the section extension field including the parameter indicating the mixed-numerology related information may be used for scheduling a terminal on a control plane.

In an embodiment, the first control message may correspond to a control message of section types 1, 5, and 6 of an open-radio access network (O-RAN), and the first control message may include scheduling information on the terminal.

In an embodiment, the parameter may include at least one of a subcarrier spacing (SCS) of a BWP constituting the mixed-numerology, a fast Fourier transform (FFT) size, a duration of a CP, a center frequency of the BWP, a size of the BWP, and a symbol map.

In an embodiment, the parameter may include at least one of the subcarrier spacing (SCS) of the BWP constituting the mixed-numerology, the fast Fourier transform (FFT) size, the duration of the CP, a position of the center frequency of the BWP, and the symbol map.

In an embodiment, the parameter may include at least one of the subcarrier spacing (SCS) of the BWP constituting the mixed-numerology, the fast Fourier transform (FFT) size, the duration of the CP, the symbol map, and a frequency offset value.

## Claims

1. A method performed by a digital unit (DU) in a wireless communication system, the method comprising:
transmitting, to a radio unit (RU), a control message including information on mixed-numerology,
wherein the information on the mixed-numerology includes information on a frame structure, information on a frequency offset, and information on a length of a cyclic prefix (CP).

2. The method of claim 1, wherein a section type of the control message is 5 or 6.

3. The method of claim 1, wherein a field length of the information on the frame structure is 8 bits, and
wherein first 4 bits among the 8 bits indicate a size of fast Fourier transform (FFT)/inverse fast Fourier transform (IFFT), and second 4 bits among the 8 bits indicate a sub-carrier spacing.

4. The method of claim 1, wherein the information on the length of the CP indicates a length of a CP per symbol.

5. The method of claim 1, wherein the control message is a message for user equipment identifier based beamforming.

6. The method of claim 1, wherein the control message further includes an extension flag (ef), an extension type (extType), and an extension length (extLen),
a field length of the extension flag is 1 bit, and the extension type indicates that a section extension of the control message is information on mixed-numerology.

7. A method performed by a radio unit (RU) in a wireless communication system, the method comprising
receiving, from a digital unit (DU), a control message including information on mixed-numerology,
wherein the information on the mixed-numerology includes information on a frame structure, information on a frequency offset, and information on a length of a cyclic prefix (CP).

8. The method of claim 7, wherein a section type of the control message is 5 or 6

9. The method of claim 7, wherein a field length of the information on the frame structure is 8 bits,
first 4 bits among the 8 bits indicate a size of fast Fourier transform (FFT) / inverse fast Fourier transform (IFFT), and second 4 bits among the 8 bits indicate a sub-carrier spacing.

10. The method of claim 7, wherein the information on the length of the CP indicates a length of a CP per symbol.

11. The method of claim 7, wherein the control message is a message for user equipment identifier based beamforming.

12. The method of claim 7, wherein the control message further includes an extension flag (ef), an extension type (extType), and an extension length (extLen),
wherein a field length of the extension flag is 1 bit, and the extension type indicates that a section extension of the control message is information on mixed-numerology.

13. A digital unit (DU) in a wireless communication system comprising:
at least one transceiver; and
at least one processor operably connected with the at least one transceiver,
wherein the at least one processor is configured to perform an operation of one of claim 1 to claim 6.

14. A radio unit (RU) in a wireless communication system comprising:
at least one transceiver; and
at least one processor operably connected with the at least one transceiver,
wherein the at least one processor is configured to perform an operation of one of claim 7 to claim 12.
